# EUROPEAN PATENT SPECIFICATION

(11) **EP 4 136 951 B1**
(45) Date of publication and mention of the grant of the patent: **18.11.2026**
(21) Application number: 22182656.3
(22) Date of filing: 01.07.2022
(51) Int. Cl.: A01C 5/06, A01B 23/06, A01B 49/06

(54) **SCRAPER SYSTEM FOR AN AGRICULTURAL MACHINE**
SCHABERSYSTEM FÜR EINE LANDWIRTSCHAFTLICHE MASCHINE
SYSTÈME DE RACLEUR POUR MACHINE AGRICOLE

(30) Priority: 16.08.2021 US 202117403059
(43) Date of publication of application: 22.02.2023
(73) Proprietor: Deere & Company, Moline, IL 61265 (US)
(72) Inventor: Kroth, Rogerio L., Mannheim (DE)
(74) Representative: Reichert, Christian

(56) References cited:
- EP-A1- 3 017 967
- US-A- 4 408 551
- US-A1- 2016 088 789
- US-A1- 2017 208 734

## Description

### Field of the Disclosure

The present disclosure relates to an agricultural machine having a row unit or fertilizer unit, and more particularly, to a scraper for an opener disc of the row unit or fertilizer unit.

### Background of the Disclosure

Work machines, such as those in the agricultural, construction, and forestry industries perform a variety of operations. In some instances, work machines include a fertilizer unit for distributing fertilizer and/or a row unit for planting seed. Fertilizer units and row units include one or more opener discs for creating a furrow as the work machine moves along the soil. The fertilizer and/or seed may be placed in the soil before the furrow is closed by a closing disc on the fertilizer unit or row unit.

Conventional row units and/or fertilizer units may include a device for scraping or otherwise removing soil and other debris from the opener disc as the work machine moves along the soil. Especially for row units, the conventional scrapers may be positioned on an internal side and an external side of the opener discs. The conventional scraper disc on the external side of the opener disc may be coupled directly to the frame of the row unit. In some operations, especially in red and/or moist soils, the conventional scraper disc directs the soil and debris inside the gauge wheel that is adjacent the external side of the opener disc, which causes a plug to form inside the gauge wheel, which reduces the effectiveness of the gauge wheel and the conventional scraper.

For example, US 2017/208734 A1 discloses a wear extender for use with planters, air seeders and drills that utilize the engagement of a flexible wheel with a disc to scrape mud from the side of the disc. The wear extender is formed of an ultra-high molecular weight plastic that is compression molded. The wear extender is generally cylindrical in shape and when installed covers the interior edge of the tire. Installation of the wear extender extends the life of the tire and reduces the need to replace the tire. In addition, due to the more-rigid nature of the wear extender as compared to the more-flexible nature of the tire, the wear extender does a better job of scraping mud than the tire. As such, use of the wear extender reduces the number amount of downtime that occurs due to poor scraping and reduces the amount and cost of maintenance due to tire wear. A similar extender for a gauge wheel is known from US 2016/088789 A1, in this case forming rectangular teeth.

Therefore, what is needed is a scraper arranged relative to the gauge wheel, such that the soil and debris removed from the opener disc is deposited away from the inside of the gauge wheel. What is also needed is a cost effective scraper. Such a scraper may be located away from the frame of the row unit or fertilizer unit as described in detail here. It may also be advantageous for the position of the scraper to be adjustable relative to the opener disc such that an operator may easily adjust the clearance therebetween.

### Summary

In an illustrative embodiment a scraper system for an agricultural machine comprises: a frame; an opener disc coupled to the frame; a gauge wheel positioned adjacent the opener disc and configured to rotate relative to the frame; and a scraper configured to rotate with the gauge wheel to remove soil or debris from the opener disc; wherein the scraper is spaced apart from the frame. The scraper is ring-shaped and includes a plurality of teeth extending radially outwardly away from a center of the gauge wheel; and each tooth of the plurality of teeth is arranged to contact the opener disc during forward travel of the agricultural machine. Each tooth of the plurality of teeth is sloped in a circumferential direction such that: (i) each tooth includes a first end and a second end that is located a distance counterclockwise from the first end, and (ii) the second end of each tooth is located radially inward of the first end of each tooth.

In some embodiments, the gauge wheel is configured to rotate counterclockwise as the agricultural machine moves in a forward direction.

In some embodiments the scraper includes a laterally inwardly facing surface, which is substantially planar and configured to contact the opener disc during forward travel of the agricultural machine.

In some embodiments, the scraper includes one or more radially outwardly facing surfaces; and the one or more radially outwardly facing surfaces intersect the laterally inwardly facing surface of the scraper to define teeth of the scraper.

In some embodiments, the gauge wheel and the scraper are separate components coupled together. In some embodiments, the scraper is coupled directly to the gauge wheel. In some embodiments, the scraper is coupled directly to the gauge wheel via a press-fit connection.

In some embodiments, the scraper includes a gauge-wheel-contacting portion comprising one or more surfaces configured to abut the gauge wheel; the scraper further includes one or more tabs positioned on the one or more surfaces configured to abut the gauge wheel; and the one or more tabs prevent rotation of the scraper relative to the gauge wheel during operation of the agricultural machine.

In some embodiments, the gauge wheel includes a compressible portion that is compressed against a radially inwardly facing surface included in the gauge-wheel-contacting portion of the scraper. In some embodiments, gauge wheel further comprises a rim positioned radially inward of the compressible portion; and the compressible portion of the gauge wheel is compressed between the rim and the scraper.

In some embodiments, the gauge wheel and the scraper are a single monolithic component.

In another illustrative embodiment, a scraper for removing soil or debris from an opener disc of an agricultural machine comprises: a ring-shaped body including a plurality of teeth defined along a circumference thereof; the ring-shaped body further includes a hoop and a lip that is defined on a radially inward side of the hoop, wherein the hoop and the lip cooperate to form the plurality of teeth; the hoop includes a radially outward side and a radially inwardly facing surface that faces opposite the radially outward side; the lip includes: (i) a first surface extending radially outwardly to the radially outwardly facing side of the hoop to define tips of the plurality of teeth, and (ii) a second surface that faces opposite the first surface; and the radially inwardly facing surface of the hoop cooperates with the second surface of the lip to define a cavity in the ring-shaped body.

In some embodiments, the radially outward side of the hoop includes a concave surface. In some embodiments, the first surface of the lip is substantially planar. In some embodiments, each tooth of the plurality of teeth is sloped in a circumferential direction and sloped in a lateral direction. In some embodiments, the scraper further comprises one or tabs coupled to at least one of the radially inwardly facing surface of the hoop and the second surface of the lip in the cavity of the ring-shaped body.

In another illustrative embodiment, a method of assembling a scraper system for an agricultural machine comprises: coupling a ring-shaped scraper to a gauge wheel of the agricultural machine in an arrangement such that an internally facing side of the ring-shaped scraper contacts an externally facing side of an opening disc of the agricultural machine.

In some embodiments, the method further comprises: removing a conventional scraper from the agricultural machine, and the conventional scraper and ring-shaped scraper are each configured to remove soil or debris from the external side of the opening disc of the agricultural machine.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is a side view of a row unit of an agricultural machine such as a row crop planter, and Fig. 1 shows a ring-shaped scraper coupled to a gauge wheel and in contact an opener disc of the row unit;
Fig. 2 is a rear perspective view of the scraper, the gauge wheel, and an adjustment mechanism that couples the gauge wheel to the frame of the row unit;
Fig. 3 is a front perspective view of the scraper;
Fig. 4 is a rear perspective view of the scraper;
Fig. 5 is a cross section view of the scraper cut along the line 5-5 of Fig. 3;
Fig. 6 is a cross section view cut along the line 6-6 of Fig. 2, which shows the press fit connection between the gauge wheel and the scraper;
Fig. 7 is a cross section view cut along the line 7-7 of Fig. 2, which shows a threaded sleeve and a locking bolt of the adjustment mechanism; and
Fig. 8 is a side view of a fertilizer unit of an agricultural machine, and Fig. 8 shows a ring-shaped scraper coupled to a gauge wheel and in contact with an opener disc of the fertilizer unit.

### Detailed Description

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

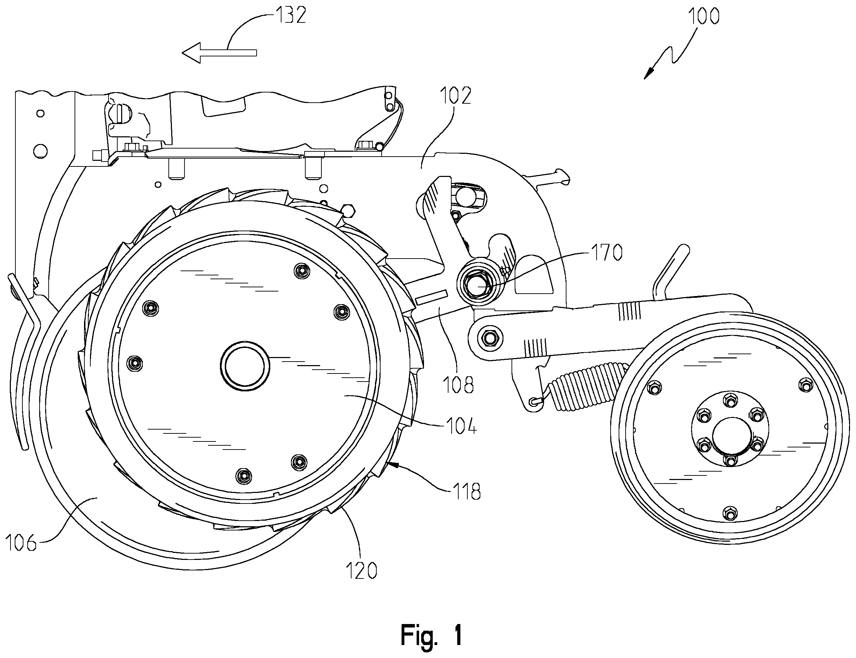

Fig. 1 is an exemplary embodiment of a row unit 100 for use with an agricultural machine such as a row crop planter. Such an agricultural machine may include a main frame supported above the ground by ground engaging mechanisms such as tracks or wheels. The main frame may support one or more commodity containers, which store seed or fertilizer. In some examples, the main frame may be coupled to an adjustable frame movable relative to the main frame. Depending on the structure of the agricultural machine, the row unit 100 may be coupled to the adjustable frame or directly to the main frame.

It should be appreciated that the disclosure herein is directed to the structure and arrange of a scraper for use with a row unit or fertilizer unit of an agricultural machine, and as such, the disclosure herein is not limited to any particular agricultural machine but instead applies to any agricultural machine capable of including one or more row units or fertilizer units.

Referring now to Fig. 1, the row unit 100 includes a frame 102, a pair of opener discs, a pair of closing discs, a pair of gauge wheels, and a pair of scrapers each coupled directly to the gauge wheels, respectively. With reference to the paired components, it should be appreciated that only one side of the machine is visible in Fig. 1, but the paired components are each mirror images of one another and as such any description of one such component applies equally to the other.

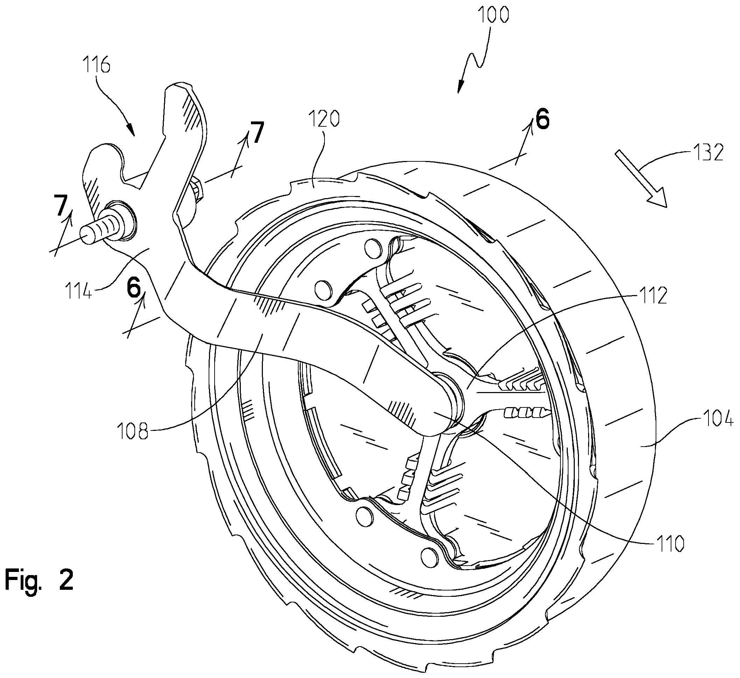

As shown in Fig. 1, a gauge wheel 104 is positioned adjacent the external side of the opener disc 106. The gauge wheel 104 is coupled indirectly to the frame 102 via an arm 108, which allows the gauge wheel 104 to travel freely in the vertical direction to determine the depth of the furrow created by the opener disc 106 as it cuts through the soil. In particular, as shown in Fig. 2, the arm 108 includes a first end 110 coupled to the coupled to a hub 112 of the gauge wheel 104 and a second end 114 coupled to the frame 102 of the row unit 100. The second end 114 comprises an adjustment mechanism 116, which is configured to change the lateral distance between the gauge wheel 104 and the opener disc 106, as will be described in more detail below.

As suggested by Fig. 1, the gauge wheel 104 is configured to rotate relative to the frame 102 of the row unit 100. The row unit 100 further includes a scraper 118 coupled directly to the gauge wheel 104. In the illustrative embodiment, the scraper 118 is ring-shaped and includes a plurality of teeth 120 configured to remove soil and debris from the external side of the opener disc 106. Each tooth 120 is arranged to contact the opener disc 106 during forward travel of the row unit 100. Specifically, as the gauge wheel 104 rotates relative to the frame 102, the scraper 118 rotates with the gauge wheel 104 abutting the opener disc 106 and thereby removing dirt and debris from the opener disc 106. The gauge wheel 104 is configured to rotate counterclockwise as the row unit 100 moves in a forward direction shown by the arrow 132. The teeth 120 are configured to contact the ground providing better traction for the gauge wheel 104 during rotation of the gauge wheel 104.

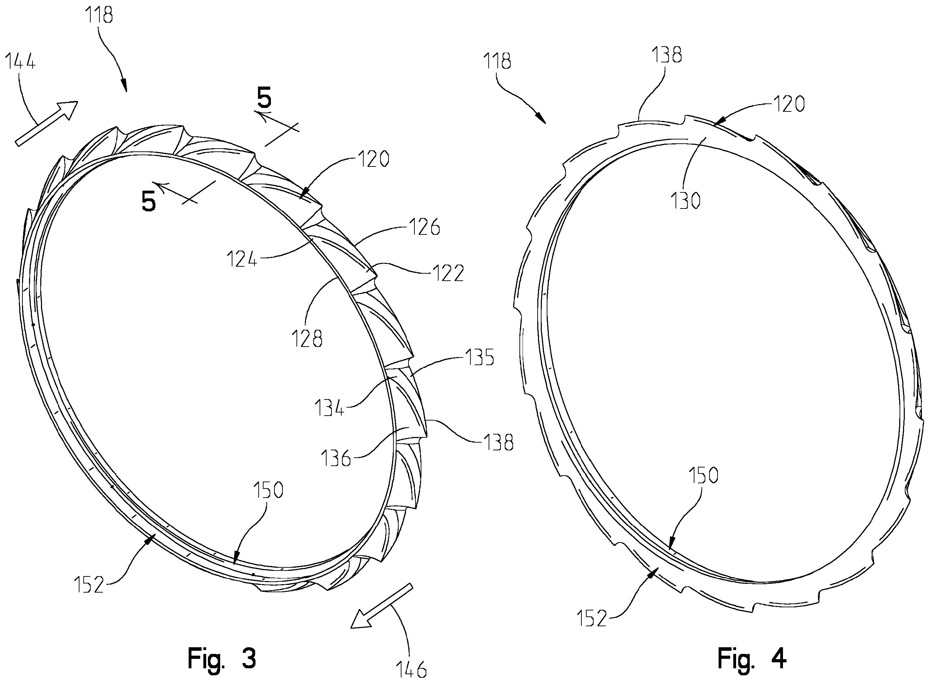

In the illustrative embodiment, as shown in Figs. 1-4, the teeth 120 are arranged at an outer periphery of the gauge wheel 104. The teeth 120 extend radially outwardly in a direction away from a center of the gauge wheel 104. Each tooth 120 is sloped in a circumferential direction, such that each tooth 120 includes a first end 122 and a second end 124 that is located a distance counterclockwise from the first end 122, and the second end 124 of each tooth 120 is located radially inward of the first end 122 of each tooth 120. In this arrangement, as shown in Fig. 3, each tooth 120 slopes downwardly in the counterclockwise direction and upwardly in the clockwise direction.

Referring still to Fig. 3, each tooth 120 is also sloped in the lateral direction (see arrows 144, 146), such that each tooth 120 includes an exterior side 128 and an interior side 126 that is located a distance laterally inward from the exterior side 128, and the interior side 126 of each tooth 120 is located radially outward of the exterior side 128 of each tooth 120. In this arrangement, each tooth 120 slopes upwardly in the laterally inward direction (arrow 144) and downwardly in the laterally outward direction (arrow 146).

Referring still to Fig. 3, the slope of each tooth 120 is defined by one or more radially outwardly facing surfaces, for example surfaces 134, 135, 136. At least one radially outwardly facing surface, e.g., 136, may be concave; at least one radially outwardly facing surface, e.g., 134, may be convex and/or concave at various portions thereof; and at least one radially outwardly facing surface, e.g., 135, may be neither concave nor convex as suggested by Figs. 3, 5 and 6. As shown in Figs. 3 and 4, the scraper 118 further includes a laterally inwardly facing surface 130. In illustrative embodiment, the laterally inwardly facing surface 130 is substantially flat or planar and configured to contact and rotate against the opener disc 106 during forward travel of the row unit 100. In some embodiments, the laterally inwardly facing surface 130 of the scraper 118 is parallel to the external surface of the opener disc 106. The one or more radially outwardly facing surfaces 134, 136 of the scraper 118 intersect the laterally inwardly facing surface 130 at edges 138 of the teeth 120.

It should be appreciated that in some embodiments, the scraper 118 and the gauge wheel 104 are defined as separate components coupled to one another, yet in other embodiments, the scraper 118 and the gauge wheel 104 are a single monolithic component.

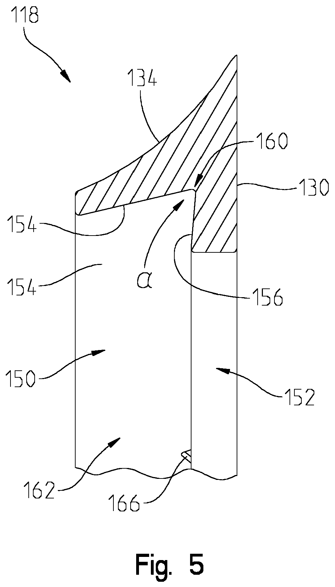

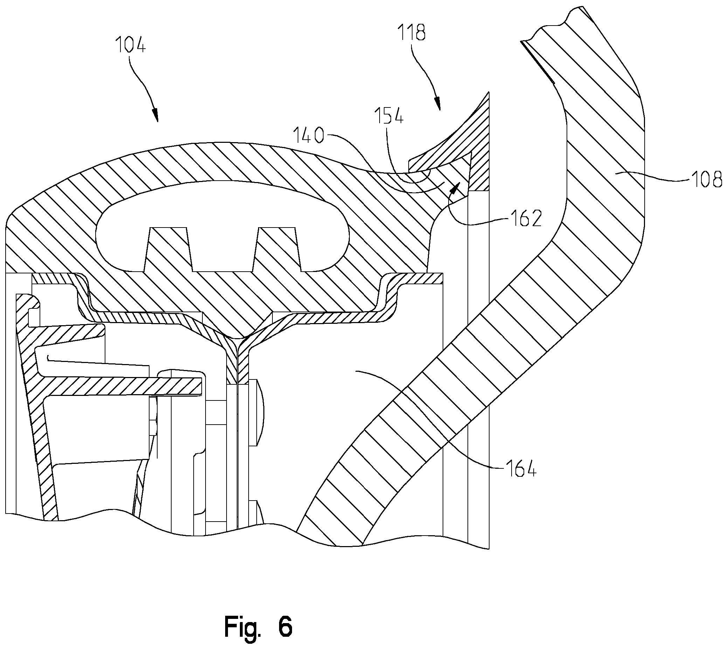

The scraper 118 may be described as including a hoop 150 and a lip 152 defined on a radially inward side of the hoop 150. Each of the hoop 150 and the lip 152 extend circumferentially to define a ring-shaped body of the scraper 118. The hoop 150 includes the one or more radially outwardly facing surfaces, e.g., 134, 135, 136, which define the teeth 120. The hoop 150 also includes a radially inwardly facing surface 154 (see Figs. 5 and 6) opposite the one or more radially outwardly facing surfaces 134, 136. The lip 152 includes the laterally inwardly facing surface 130 of the scraper 118 described above (i.e. the surface that contacts the opener disc 106). The laterally inwardly facing surface 130 may be described as a first surface 130, especially when the scraper 118 is detached from the gauge wheel 104.

Turning now to Fig. 5, a cross-section view of the scraper 118 is shown. As shown in Fig. 5, the lip 152 also includes a second surface 156 opposite the first surface 130 of the lip 152. In the illustrative embodiment, the second surface 156 of the lip 152 is positioned at an acute angle relative to the radially inwardly facing surface 154 of the hoop 150. The acute angle is referred to as the angle α in Fig. 5. The radially inwardly facing surface 154 of the hoop 150 and second surface 156 of the lip 152 may be referred to as a gauge-wheel-contacting portion 160 of the scraper 118. As shown in Fig. 5, the gauge-wheel-contacting portion 160 of the scraper 118 defines a cavity 162 in the ring-shaped body of the scraper 118.

As suggested by Fig. 6, in the illustrative embodiment, the scraper 118 is coupled directly to the gauge wheel 104 via a press-fit connection. For example, the gauge wheel 104 includes a compressible portion 140 that is compressed against the radially inwardly facing surface 154 of the scraper 118. In other words, the compressible portion 140 is positioned in the cavity 162 of the scraper 118 to form the press-fit connection. The gauge wheel 104 further comprises a rim 164 positioned radially inward of the compressible portion 140 thereof, and the compressible portion 140 of the gauge wheel 140 is compressed between the rim 164 and the scraper 118. The compressible portion 140 of the gauge wheel 104 applies a radially outwardly directed force to the radially inwardly facing surface 154 of the scraper 118 urging the scraper 118 to expand radially outwardly, which, as resisted by the scraper 118, forms the press-fit connection between the scraper 118 and the gauge wheel 104.

Referring again to Fig. 5, the scraper 118 may include one or more tabs 166 defined in the cavity 162. The one or more tabs 166 abut the gauge wheel 104 to prevent rotation of the scraper 118 relative to the gauge wheel 104 during rotation of the row unit 100. This is especially advantageous since the teeth 120 of the scraper 118 engage with the soil during rotation of the gauge wheel 104.

In use, the scraper 118 may be assembled with the gauge wheel 104 as follows. First a conventional scraper may be removed from the row unit 100. The conventional scraper may be coupled to the frame 102 of the row unit directly 100 and may extend into a radially inner portion of the gauge wheel 104. Other conventional scrapers may be arranged in different orientations. In any event, the conventional scraper is often configured to remove soil or debris from the external side of the opening disc 106 of the row unit 100. Second, the ring-shaped scraper 118 may be coupled to the gauge wheel 104 via the press-fit connection described here. In some embodiments, the scraper 118 may be coupled to the gauge wheel 104 in other arrangements. In any event, when the scraper 118 is coupled to the gauge wheel 104, an internally facing side of the ring-shaped scraper (e.g., laterally inwardly facing surface 130 of the scraper 118) contacts an external side of an opening disc 106 of the row unit 100. During operation of the agricultural machine, the row unit 100 moves in the forward direction 132, which causes rotation of the gauge wheel 104 and thereby rotation of the scraper 118 coupled to the gauge wheel 104. As the scraper 118 rotates, the teeth 120 of the scraper 118 contact the opener disc 106 removing dirt and debris therefrom and depositing the dirt and debris away from the radially inner portion of the gauge wheel 104.

Referring again to Fig. 2, the arm 108 is configured to couple to gauge wheel 104 (and the scraper 118) to the frame 102 as described above. Specifically, the hub 112 of the gauge wheel 104 is coupled to the first end 110 of the arm 108, and the gauge wheel 104 rotates about the first end 110 of the arm 108. The second end 114 of the arm includes an adjustment mechanism 116 configured to adjust the lateral distance between the scraper 118 and the opener disc 106.

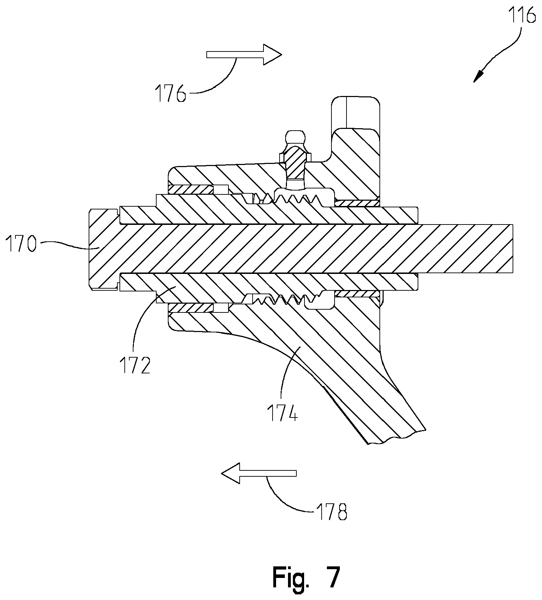

As shown in Fig. 7, the adjustment mechanism 116 includes a torque bolt 170, a threaded sleeve 172, and a housing 174. The torque bolt 172 is positioned within the threaded sleeve 172, and the threaded sleeve 172 is positioned within and threadingly coupled to the housing 174. In use, the torque bolt 170 is loosened, and thereafter, the threaded sleeve 174 may be moved laterally inward (in the direction of arrow 176) or laterally outward (in the direction of arrow 178) relative to the housing 174. Lateral movement of the threaded sleeve 172 relative to the housing 174 adjusts the lateral position of the scraper 118 relative to the opener disc 106. Accordingly, the scraper 118 may be adjusted so that a space exists between the scraper 118 and the opener disc 106, which may be advantageous in certain soil conditions or in certain planting or fertilizing applications.

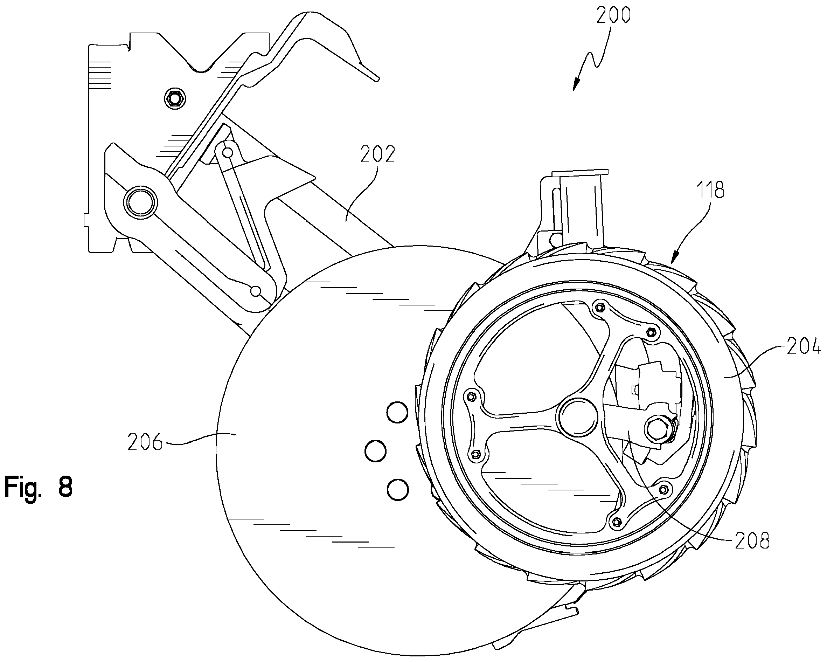

As shown in Fig. 8, the scraper 118 is suitable for use with a fertilizer unit 200 that includes an opener disc 206 and a gauge wheel 204. It should be appreciated that the gauge wheel 204 (or gauge wheel 104) could be replaced with another rotating component positioned adjacent to the opener disc 206 (or the opener disc 106), in which the case, the scraper 118 would be attached to the another rotating component and still configured to abut and rotate against the opener disc 206 (or opener disc 106) as described above. Referring still to Fig. 8, in the illustrative embodiment, the fertilizer unit 200 includes a frame 202, the opener disc 206 coupled to the frame 202, and the gauge wheel 204, which is positioned adjacent the opener disc 206. The gauge wheel 204 is coupled indirectly to the frame 102 via an arm 208. The ring-shaped scraper 118 is coupled to a periphery of the gauge wheel 204 and configured to rotate therewith, contacting the opener disc 206, to remove dirt and debris from the opener disc 206. The fertilizer unit 200 with the scraper 118 is an example of a single disc opener embodiment, while the row unit 100 with the scraper 118 is an example of a dual disc opener embodiment. It should be appreciated that, unless otherwise stated, the arrangement and components of the scraper 118 for the single disc opener embodiment are the same as those described for the dual disc opener embodiment. This application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A scraper system for an agricultural machine comprising:
a frame (102);
an opener disc (106) coupled to the frame (102);
a gauge wheel (104) positioned adjacent the opener disc (106) and configured to rotate relative to the frame (102); and
a scraper (118) configured to rotate with the gauge wheel (104) to remove soil or debris from the opener disc (106);
wherein the scraper (118) is spaced apart from the frame (102),
wherein the scraper (118) is ring-shaped,
wherein the scraper (118) includes a plurality of teeth (120) extending radially outwardly away from a center of the gauge wheel (104), and
wherein each tooth (120) of the plurality of teeth (120) is arranged to contact the opener disc (106) during forward travel of the agricultural machine, **characterized in that**
each tooth (120) of the plurality of teeth (120) is sloped in a circumferential direction such that: (i) each tooth includes a first end (122) and a second end (124) that is located a distance counterclockwise from the first end (122), and (ii) the second end (124) of each tooth (120) is located radially inward of the first end (122) of each tooth (120).

2. The scraper system of claims 1, wherein the gauge wheel (104) is configured to rotate counterclockwise as the agricultural machine moves in a forward direction.

3. The scraper system of claim 1 or 2, wherein the scraper includes a laterally inwardly facing surface (130), which is substantially planar and configured to contact the opener disc (106) during forward travel of the agricultural machine.

4. The scraper system of one of the claims 1 to 3, wherein the scraper (118) includes one or more radially outwardly facing surfaces (134, 135, 136); and
wherein the one or more radially outwardly facing surfaces (134, 135, 136) intersect the laterally inwardly facing surface (130) of the scraper (118) to define teeth (120) of the scraper (118).

5. The scraper system of one of the claims 1 to 4, wherein the gauge wheel (104) and the scraper (118) are separate components coupled together.

6. The scraper system of one of the claims 1 to 5, wherein the scraper (118) is coupled directly to the gauge wheel (104).

7. The scraper system of one of the claims 1 to 6, wherein the scraper (118) includes a gauge-wheel-contacting portion (160) comprising one or more surfaces (154, 156) configured to abut the gauge wheel (104);
wherein the scraper (118) further includes one or more tabs (166) positioned on the one or more surfaces (154, 156) configured to abut the gauge wheel (104); and
wherein the one or more tabs (166) prevent rotation of the scraper (118) relative to the gauge wheel (104) during operation of the agricultural machine.

8. The scraper system of claim 7, wherein the gauge wheel (104) includes a compressible portion (140) that is compressed against a radially inwardly facing surface (154) included in the gauge-wheel-contacting portion (160) of the scraper (118).

9. The scraper system of claim 8, wherein gauge wheel (104) further comprises a rim (164) positioned radially inward of the compressible portion (140); and
wherein the compressible portion (140) of the gauge wheel (104) is compressed between the rim (164) and the scraper (118).

10. The scraper system of one of the claims 1 to 9, wherein the gauge wheel (104) and the scraper (118) are a single monolithic component.

11. A method of assembling a scraper system according to claims 1 and 5 comprising:
coupling the ring-shaped scraper (118) to the gauge wheel (104) of the agricultural machine in an arrangement such that an internally facing side of the ring-shaped scraper (118) contacts an externally facing side of the opening disc (106) of the agricultural machine.

12. The method of claim 11, further comprising:
removing a conventional scraper from the agricultural machine, wherein the conventional scraper and the ring-shaped scraper (118) are each configured to remove soil or debris from the external side of the opening disc (106) of the agricultural machine.

## Patentansprüche

1. Schabersystem für eine landwirtschaftliche Maschine, umfassend:
einen Rahmen (102);
eine Öffnerscheibe (106), die mit dem Rahmen (102) gekoppelt ist;
ein Einstellrad (104), das angrenzend an die Öffnerscheibe (106) positioniert und dazu ausgelegt ist, sich relativ zu dem Rahmen (102) zu drehen; und
einen Schaber (118), der dazu ausgelegt ist, sich mit dem Einstellrad (104) zu drehen, um Erde oder Schmutz von der Öffnerscheibe (106) zu entfernen;
wobei der Schaber (118) von dem Rahmen (102) beabstandet ist,
wobei der Schaber (118) ringförmig ist,
wobei der Schaber (118) mehrere Zähne (120) beinhaltet, die sich radial weg von einer Mitte des Einstellrads (104) nach außen erstrecken, und
wobei jeder Zahn (120) der mehreren Zähne (120) angeordnet ist, um während einer Vorwärtsfahrt der landwirtschaftlichen Maschine mit der Öffnerscheibe (106) in Kontakt zu kommen, **dadurch gekennzeichnet, dass** jeder Zahn (120) der mehreren Zähne (120) in einer umlaufenden Richtung geneigt ist, so dass: (i) jeder Zahn ein erstes Ende (122) und ein zweites Ende (124) aufweist, das sich in einem Abstand entgegen dem Uhrzeigersinn von dem ersten Ende (122) befindet, und (ii) sich das zweite Ende (124) jedes Zahns (120) radial einwärts von dem ersten Ende (122) jedes Zahns (120) befindet.

2. Schabersystem nach Anspruch 1, wobei das Einstellrad (104) dazu ausgelegt ist, sich entgegen dem Uhrzeigersinn zu drehen, wenn sich die landwirtschaftliche Maschine in eine Vorwärtsrichtung bewegt.

3. Schabersystem nach Anspruch 1 oder 2, wobei der Schaber eine seitlich nach innen weisende Oberfläche (130) aufweist, die im Wesentlichen eben ist und dazu ausgelegt ist, während der Vorwärtsfahrt der landwirtschaftlichen Maschine mit der Öffnerscheibe (106) in Kontakt zu kommen.

4. Schabersystem nach einem der Ansprüche 1 bis 3, wobei der Schaber (118) eine oder mehrere radial nach außen weisende Oberflächen (134, 135, 136) aufweist; und wobei die eine oder die mehreren radial nach außen weisenden Oberflächen (134, 135, 136) die lateral nach innen weisende Oberfläche (130) des Schabers (118) schneiden, um Zähne (120) des Schabers (118) zu definieren.

5. Schabersystem nach einem der Ansprüche 1 bis 4, wobei das Einstellrad (104) und der Schaber (118) separate Komponenten sind, die miteinander gekoppelt sind.

6. Schabersystem nach einem der Ansprüche 1 bis 5, wobei der Schaber (118) direkt mit dem Einstellrad (104) gekoppelt ist.

7. Schabersystem nach einem der Ansprüche 1 bis 6, wobei der Schaber (118) einen Einstellrad-Kontaktabschnitt (160) beinhaltet, der eine oder mehrere Oberflächen (154, 156) umfasst, die dazu ausgelegt sind, an das Einstellrad (104) anzustoßen;
wobei der Schaber (118) ferner eine oder mehrere Nasen (166) beinhaltet, die auf der einen oder den mehreren Oberflächen (154, 156) positioniert sind, die dazu ausgelegt sind, an das Einstellrad (104) anzustoßen; und wobei die eine oder die mehreren Nasen (166) eine Drehung des Schabers (118) relativ zu dem Einstellrad (104) während des Betriebs der landwirtschaftlichen Maschine verhindern.

8. Schabersystem nach Anspruch 7, wobei das Einstellrad (104) einen komprimierbaren Abschnitt (140) beinhaltet, der gegen eine radial nach innen weisende Oberfläche (154) komprimiert ist, die in dem Einstellrad-Kontaktabschnitt (160) des Schabers (118) enthalten ist.

9. Schabersystem nach Anspruch 8, wobei das Einstellrad (104) ferner eine Felge (164) umfasst, die radial einwärts des komprimierbaren Abschnitts (140) positioniert ist; und
wobei der komprimierbare Abschnitt (140) des Einstellrads (104) zwischen der Felge (164) und dem Schaber (118) komprimiert ist.

10. Schabersystem nach einem der Ansprüche 1 bis 9, wobei das Einstellrad (104) und der Schaber (118) eine einzige monolithische Komponente sind.

11. Verfahren zum Zusammenbauen eines Schabersystems nach den Ansprüchen 1 und 5, umfassend:
Koppeln des ringförmigen Schabers (118) mit dem Einstellrad (104) der landwirtschaftlichen Maschine in einer Anordnung, so dass eine nach innen weisende Seite des ringförmigen Schabers (118) an einer nach außen weisenden Seite der Öffnerscheibe (106) der landwirtschaftlichen Maschine anliegt.

12. Verfahren nach Anspruch 11, das ferner Folgendes umfasst:
Entfernen eines herkömmlichen Schabers von der landwirtschaftlichen Maschine, wobei der herkömmliche Schaber und der ringförmige Schaber (118) jeweils dazu ausgelegt sind, Erde oder Schmutz von der Außenseite der Öffnerscheibe (106) der landwirtschaftlichen Maschine zu entfernen.

## Revendications

1. Système de décrottoir pour une machine agricole, comprenant :
un bâti (102) ;
un disque ouvreur (106) couplé au bâti (102) ;
une roue de terrage (104) positionnée de façon adjacente au disque ouvreur (106) et configurée pour entrer en rotation relativement au bâti (102) ; et
un décrottoir (118) configuré pour entrer en rotation avec la roue de terrage (104) pour enlever de la terre ou des débris du disque ouvreur (106) ;
dans lequel le décrottoir (118) est espacé du bâti (102),
dans lequel le décrottoir (118) est en forme d'anneau,
dans lequel le décrottoir (118) inclut une pluralité de dents (120) s'étendant radialement vers l'extérieur en éloignement d'un centre de la roue de terrage (104), et
dans lequel chaque dent (120) de la pluralité de dents (120) est agencée pour entrer en contact avec le disque ouvreur (106) durant un déplacement en marche avant de la machine agricole, **caractérisé en ce que** chaque dent (120) de la pluralité de dents (120) est penchée dans une direction circonférentielle de manière telle que : (i) chaque dent inclut une première extrémité (122) et une seconde extrémité (124) qui est située à une distance dans le sens inverse des aiguilles d'une montre par rapport à la première extrémité (122), et (ii) la seconde extrémité (124) de chaque dent (120) est située radialement vers l'intérieur de la première extrémité (122) de chaque dent (120).

2. Système de décrottoir de la revendication 1, dans lequel la roue de terrage (104) est configurée pour entrer en rotation dans le sens inverse des aiguilles d'une montre quand la machine agricole se meut dans une direction en marche avant.

3. Système de décrottoir de la revendication 1 ou 2, dans lequel le décrottoir inclut une surface tournée latéralement vers l'intérieur (130), qui est sensiblement plane et configurée pour entrer en contact avec le disque ouvreur (106) durant le déplacement en marche avant de la machine agricole.

4. Système de décrottoir de l'une des revendications 1 à 3, dans lequel le décrottoir (118) inclut une ou plusieurs surfaces tournées radialement vers l'extérieur (134, 135, 136) ; et
dans lequel l'une ou les plusieurs surfaces tournées radialement vers l'extérieur (134, 135, 136) intersectent la surface tournée latéralement vers l'intérieur (130) du décrottoir (118) pour définir des dents (120) du décrottoir (118).

5. Système de décrottoir de l'une des revendications 1 à 4, dans lequel la roue de terrage (104) et le décrottoir (118) sont des composants distincts couplés ensemble.

6. Système de décrottoir de l'une des revendications 1 à 5, dans lequel le décrottoir (118) est couplé directement à la roue de terrage (104).

7. Système de décrottoir de l'une des revendications 1 à 6, dans lequel le décrottoir (118) inclut une partie d'entrée en contact avec roue de terrage (160) comprenant une ou plusieurs surfaces (154, 156) configurées pour être contiguës à la roue de terrage (104) ;
dans lequel le décrottoir (118) inclut en outre une ou plusieurs pattes (166) positionnées sur l'une ou les plusieurs surfaces (154, 156) configurées pour être contiguës à la roue de terrage (104) ; et
dans lequel l'une ou les plusieurs pattes (166) empêchent la rotation du décrottoir (118) relativement à la roue de terrage (104) durant le fonctionnement de la machine agricole.

8. Système de décrottoir de la revendication 7, dans lequel la roue de terrage (104) inclut une partie compressible (140) qui est comprimée contre une surface tournée radialement vers l'intérieur (154) incluse dans la partie d'entrée en contact avec roue de terrage (160) du décrottoir (118).

9. Système de décrottoir de la revendication 8, dans lequel la roue de terrage (104) comprend en outre une jante (164) positionnée radialement vers l'intérieur de la partie compressible (140) ; et
dans lequel la partie compressible (140) de la roue de terrage (104) est comprimée entre la jante (164) et le décrottoir (118).

10. Système de décrottoir de l'une des revendications 1 à 9, dans lequel la roue de terrage (104) et le décrottoir (118) sont un seul composant monolithique.

11. Procédé d'assemblage d'un système de décrottoir selon les revendications 1 et 5, comprenant :
le couplage du décrottoir en forme d'anneau (118) à la roue de terrage (104) de la machine agricole en un agencement tel qu'un côté tourné de façon interne du décrottoir en forme d'anneau (118) entre en contact avec un côté tourné de façon externe du disque ouvreur (106) de la machine agricole.

12. Procédé de la revendication 11, comprenant en outre : l'enlèvement d'un décrottoir classique de la machine agricole, dans lequel le décrottoir classique et le décrottoir en forme d'anneau (118) sont chacun configurés pour enlever de la terre ou des débris du côté externe du disque ouvreur (106) de la machine agricole.
